# EUROPÄISCHE PATENTANMELDUNG

(11) **EP 4 202 535 A1**
(43) Veröffentlichungstag der Anmeldung: **28.06.2023**
(21) Anmeldenummer: 21217423.9
(22) Anmeldetag: 23.12.2021
(51) Int. Cl.: G02B 27/09

(54) **LASERSYSTEM ZUR ERZEUGUNG EINER LASERLINIE**

(71) Anmelder: HILTI Aktiengesellschaft, 9494 Schaan (LI)
(72) Erfinder: Dang, Lieu-Kim, 9473 Gams (CH)
(74) Vertreter: Hilti Aktiengesellschaft Corporate Intellectual Property

(57) **Zusammenfassung**

Lasersystem (10) zur Erzeugung einer Laserline, aufweisend eine Laserstrahlquelle (11), die einen Laserstrahl (31) erzeugt, eine Fokussieroptik (12), die einen Laserstrahl in einen fokussierten Laserstrahl (34-2) umformt, und eine Umlenkoptik (14), die einen auftreffenden Laserstrahl (34-2) in eine Ausbreitungsebene (40-2) senkrecht zur Strahlachse (35-2) des auftreffenden Laserstrahls (34-2) umlenkt. Zwischen der Laserstrahlquelle (11) und der Umlenkoptik (14) ist eine verstellbare Blendeneinrichtung (15) angeordnet, zwischen einer ersten Position mit einem ersten Öffnungsdurchmesser und einer zweiten Position mit einem zweiten Öffnungsdurchmesser (D₂) verstellbar ist.

## Beschreibung

### Technisches Gebiet

Die vorliegende Erfindung betrifft ein Lasersystem zur Erzeugung einer Laserlinie gemäß dem Oberbegriff des Anspruchs 1.

### Stand der Technik

Um Nivellier- oder Markierungsarbeiten im Innen- und Außenbereich durchzuführen, sind Lasersysteme bekannt, die auf einer Projektionsfläche eine Laserlinie erzeugen. Bei diesen Lasersystemen wird unterschieden zwischen Rotationslasern, die die Laserlinie durch Rotation einer Umlenkoptik um eine Rotationsachse erzeugen, und Linienlasern, die die Laserlinie mithilfe einer Strahlformungsoptik, beispielsweise einer Zylinderlinse, einem Pentaprisma oder einem Kegelspiegel, erzeugen. Damit die bekannten Lasersystemen ohne Schutzmaßnahmen in Form von Schutzbrillen und Reflektoren eingesetzt werden können, muss die Laserleistung begrenzt werden, um Schäden des menschlichen Auges zu verhindern. Für Lasersysteme der Laserklasse 2 oder 2M beträgt die maximal zulässige Laserleistung 1 mW.

Bekannte Lasersysteme können in der Regel in mindestens zwei unterschiedlichen Entfernungsbereichen eingesetzt werden. Die Breite der Laserlinie, die die Lasersysteme auf einer Projektionsfläche erzeugen, hängt unter anderem von der Entfernung des Lasersystems zur Projektionsfläche ab. Ausgehend von Lasersystem nimmt die Breite der Laserlinie ab und erreicht in der Strahltaille einen minimalen Wert. Bei größeren Entfernungen zwischen dem Lasersystem und der Projektionsfläche nimmt die Breite der Laserlinie hinter der Strahltaille wieder zu.

Um auf einer Projektionsfläche eine schmale Laserlinie zu erzeugen, sind Lasersysteme mit einer verstellbaren Fokussieroptik bekannt. Die verstellbare Fokussieroptik ermöglicht es, die Position der Strahltaille des Laserstrahls zu verschieben.

### Darstellung der Erfindung

Die Aufgabe der vorliegenden Erfindung besteht in der Entwicklung eines Lasersystems, mit dem in mindestens zwei Entfernungsbereichen des Lasersystems zu einer Projektionsfläche eine schmale Laserlinie erzeugt werden kann. Zusätzlich soll die Laserlinie für die mindestens zwei Entfernungsbereiche auf der Projektionsfläche gut sichtbar sein.

Diese Aufgabe wird bei dem eingangs genannten Lasersystem erfindungsgemäß durch die Merkmale des unabhängigen Anspruchs 1 gelöst. Vorteilhafte Weiterbildungen sind in den abhängigen Ansprüchen angegeben.

Erfindungsgemäß ist das Lasersystem dadurch gekennzeichnet, dass zwischen der Laserstrahlquelle und der Umlenkoptik eine verstellbare Blendeneinrichtung angeordnet ist. Die verstellbare Blendeneinrichtung kann den Laserstrahl, den die Laserstrahlquelle erzeugt, formen und den Strahldurchmesser reduzieren. Dabei erfolgt die Reduzierung des Strahldurchmessers über den Öffnungsdurchmesser der Blendenöffnung.

Bevorzugt ist die Blendeneinrichtung zwischen einer ersten Position und einer zweiten Position verstellbar. Eine Blendeneinrichtung, die zwischen einer ersten Position und einer zweiten Position verstellbar ist, kann in der ersten Position einen ersten Strahldurchmesser und in der zweiten Position einen zweiten Strahldurchmesser, der kleiner als der erste Strahldurchmesser ist, erzeugen.

Das erfindungsgemäße Lasersystem ist so ausgelegt, dass der erste Strahldurchmesser für einen ersten Entfernungsbereich und der zweite Strahldurchmesser für einen zweiten Entfernungsbereich vorgesehen ist, wobei der erste Entfernungsbereich größere Entfernungen umfasst als der zweite Entfernungsbereich. Da die Sichtbarkeit einer Laserlinie mit größeren Entfernungen abnimmt, ist es vorteilhaft, dass der größere erste Strahldurchmesser für größere Entfernungen vorgesehen ist, da die volle Laserleistung in größeren Entfernungen genutzt werden kann. Die Fokussieroptik des Lasersystems wird so ausgewählt, dass die Strahltaille des Laserstrahls im ersten Entfernungsbereich liegt und auf der Projektionsfläche eine schmale, gut sichtbare Laserlinie erzeugt wird. In kleineren Entfernungen wird die Laserleistung durch die Blendeneinrichtung reduziert; die Begrenzung des Strahldurchmessers wirkt sich positiv auf die Breite der Laserlinie aus (schmale Laserlinie) und ist im Hinblick auf die Sichtbarkeit der Laserlinie auf der Projektionsfläche unkritisch.

In einer bevorzugten Ausführung weist die Blendeneinrichtung in der ersten Position einen ersten Öffnungsdurchmesser und in der zweiten Position einen zweiten Öffnungsdurchmesser auf, wobei der erste Öffnungsdurchmesser und zweite Öffnungsdurchmesser verschieden sind.

In einer alternativen bevorzugten Ausführung ist die Blendeneinrichtung in der ersten Position außerhalb des Strahlengangs des Laserstrahls und in der zweiten Position im Strahlengang des Laserstrahls angeordnet. Wenn die Blendeneinrichtung in der ersten Position außerhalb des Strahlengangs des Laserstrahls angeordnet ist, erfolgt keine Begrenzung des Laserstrahls. Wird die Blendeneinrichtung in der zweiten Position im Strahlengang des Laserstrahls angeordnet, erfolgt eine Begrenzung des Laserstrahls durch die Blendeneinrichtung. Auf einer Projektionsfläche wird eine schmale Laserlinie erzeugt, deren Breite kleiner ist als ohne die Begrenzung des Laserstrahls.

In einer bevorzugten Ausführung ist die Blendeneinrichtung als Irisblende ausgebildet, die zwischen einer minimalen Blendenöffnung und einer maximalen Blendenöffnung verstellbar ist. Die Verwendung einer Irisblende als Blendeneinrichtung hat den Vorteil, dass die Blendenöffnung stufenlos verstellbar ist. Der Anwender kann mithilfe der Irisblende in verschiedenen Entfernungsbereichen zwischen dem Lasersystem und einer Projektionsfläche eine schmale Laserlinie erzeugen.

In einer alternativen bevorzugten Ausführung weist die Blendeneinrichtung eine Kreisöffnung und einen ersten Kreisring auf, wobei der erste Kreisring konzentrisch zur Kreisöffnung angeordnet ist und zwischen einem ersten Zustand und einem zweiten Zustand schaltbar ist. Bevorzugt ist der erste Kreisring für die Wellenlänge der Laserstrahlquelle im ersten Zustand durchlässig mit einem Transmissionsgrad T grösser als 90% und im zweiten Zustand undurchlässig mit einem Transmissionsgrad T kleiner als 10% ausgebildet.

Ein erster Kreisring, der zwischen einem durchlässigen ersten Zustand und einem undurchlässigen zweiten Zustand schaltbar ist, ermöglicht die Formung eines ersten Laserstrahls mit einem ersten Strahldurchmesser und eines zweiten Laserstrahls mit einem zweiten Strahldurchmesser, der kleiner als der erste Strahldurchmesser ist. Dabei sind der erste Strahldurchmesser für einen ersten Entfernungsbereich und der zweite Strahldurchmesser für einen zweiten Entfernungsbereich ausgelegt, wobei der erste Entfernungsbereich größere Entfernungen umfasst als der zweite Entfernungsbereich.

Bevorzugt weist die Blendeneinrichtung einen zweiten Kreisring auf, wobei der zweite Kreisring konzentrisch zum ersten Kreisring angeordnet ist und zwischen einem ersten Zustand und einem zweiten Zustand schaltbar ist. Bevorzugt ist der zweite Kreisring für die Wellenlänge der Laserstrahlquelle im ersten Zustand durchlässig mit einem Transmissionsgrad T grösser als 90% und im zweiten Zustand undurchlässig mit einem Transmissionsgrad T kleiner als 10% ausgebildet.

Ein zweiter Kreisring, der konzentrisch zum ersten Kreisring angeordnet ist und zwischen einem durchlässigen ersten Zustand und einem undurchlässigen zweiten Zustand schaltbar ist, ermöglicht die Formung eines dritten Laserstrahls mit einem dritten Strahldurchmesser, der kleiner als der zweite Strahldurchmesser ist. Dabei ist der dritte Strahldurchmesser für einen dritten Entfernungsbereich ausgelegt, wobei der dritte Entfernungsbereich kleinere Entfernungen umfasst als der zweite Entfernungsbereich.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: ein erfindungsgemäßes Lasersystem, das eine Laserstrahlquelle, eine Fokussieroptik, eine Umlenkoptik und eine verstellbare Blendeneinrichtung aufweist;
- FIGN. 2A, B: das Lasersystem der FIG. 1 in einer ersten Position (FIG. 2A) und einer zweiten Position (FIG. 2B) der Blendeneinrichtung;
- FIGN. 3A, B: ein weiteres erfindungsgemäßes Lasersystem mit einer verstellbaren Blendeneinrichtung in einer ersten Position (FIG. 3A) und einer zweiten Position (FIG. 3B) der Blendeneinrichtung;
- FIGN. 4A, B: eine als Irisblende ausgebildete Blendeneinrichtung, die stufenlos zwischen einer minimalen Blendenöffnung (FIG. 4A) und einer maximalen Blendenöffnung (FIG. 4B) verstellbar ist;
- FIG. 5: eine als Blendenrad ausgebildete weitere Blendeneinrichtung, die zwischen einer ersten Position, einer zweiten Position und einer dritten Position verstellbar ist;
- FIG. 6: eine weitere Blendeneinrichtung, die zwischen einer ersten Position, einer zweiten Position und einer dritten Position verstellbar ist; und
- FIGN. 7A-C: die Blendeneinrichtung der FIG. 6 in der ersten Position (FIG. 7A), der zweiten Position (FIG. 7B) und der dritten Position (FIG. 7C).

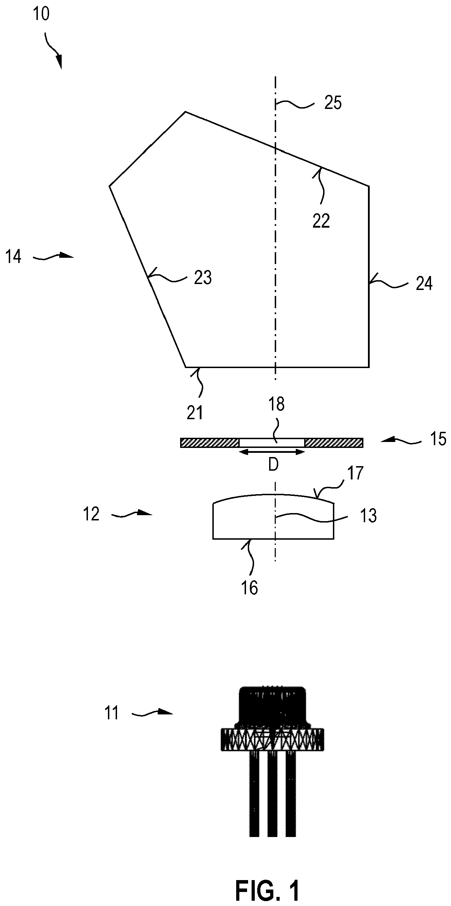

**FIG. 1** zeigt ein erfindungsgemäßes Lasersystem **10,** das als Rotationslaser ausgebildet ist und auf einer Projektionsfläche eine Laserlinie erzeugt. Das Lasersystem 10 umfasst eine Laserstrahlquelle **11,** eine als Fokussieroptik ausgebildete Strahlformungsoptik **12** mit einer optischen Achse **13,** eine als Pentaprisma ausgebildete Umlenkoptik **14** und eine Blendeneinrichtung **15.** Die Komponenten des Lasersystems 10 sind in der Reihenfolge Laserstrahlquelle 11, Fokussieroptik 12, Blendeneinrichtung 15 und Umlenkoptik 14 angeordnet.

Die Laserstrahlquelle 11 kann als Halbleiterlaser mit einer Wellenlänge im sichtbaren Spektrum ausgebildet sein, beispielsweise als roter Halbleiterlaser mit einer Wellenlänge von 635 nm oder als grüner Halbleiterlaser mit einer Wellenlänge zwischen 510 und 555 nm. Die Eigenschaften der weiteren optischen Komponenten 12, 14, 15 des Lasersystems 10 sind an die Wellenlänge der Laserstrahlquelle 11 angepasst.

Die Fokussieroptik 12 weist im Ausführungsbeispiel eine plane Eintrittsfläche **16** und eine gekrümmte Austrittsfläche **17** auf. Alternativ kann die Eintrittsfläche 16 als gekrümmte Fläche und die Austrittsfläche 17 als plane Fläche ausgebildet sein oder die Ein- und Austrittsflächen 16, 17 sind als gekrümmte Flächen ausgebildet. Als optische Achse 13 der Fokussieroptik 12 ist eine Gerade definiert, die durch den Krümmungsmittelpunkt der gekrümmten Fläche verläuft und senkrecht auf der planen Fläche steht oder bei zwei gekrümmten Flächen durch die Krümmungsmittelpunkte der gekrümmten Flächen verläuft.

Die Blendeneinrichtung 15, die zwischen der Fokussieroptik 12 und der Umlenkoptik 14 angeordnet ist, ist zwischen einer ersten Position und zweiten Position verstellbar. Die Blendeneinrichtung 15 weist eine Blendenöffnung **18** mit einem Öffnungsdurchmesser **D** auf. In der ersten Position weist die Blendenöffnung 18 einen ersten Öffnungsdurchmesser auf und in der zweiten Position einen zweiten Öffnungsdurchmesser, der vom ersten Öffnungsdurchmesser verschieden ist.

Die als Pentaprisma ausgebildete Umlenkoptik 14 weist eine Eintrittsfläche **21,** eine erste Reflektionsfläche **22,** eine zweite Reflektionsfläche **23** und eine Austrittsfläche **24** auf. Die Eintrittsfläche 21 und Austrittsfläche 24 sind für die Wellenlänge der Laserstrahlquelle 11 als Transmissionsflächen ausgebildet und ein auf die Ein- oder Austrittsfläche 21, 24 auftreffender Laserstrahl wird überwiegend transmittiert. Die erste Reflektionsfläche 22 und zweite Reflektionsfläche 23 sind für die Wellenlänge der Laserstrahlquelle 11 als Reflektionsflächen ausgebildet und ein auftreffender Laserstrahl wird überwiegend reflektiert.

Das Lasersystem 10 ist als Rotationslaser ausgebildet. Die als Pentaprisma ausgebildete Umlenkoptik 14 wird mittels einer Motoreinheit um eine Rotationsachse **25** bewegt. Dabei verläuft die Rotationsachse 25 parallel zur Strahlachse eines in das Pentaprisma 14 eintretenden Laserstrahls.

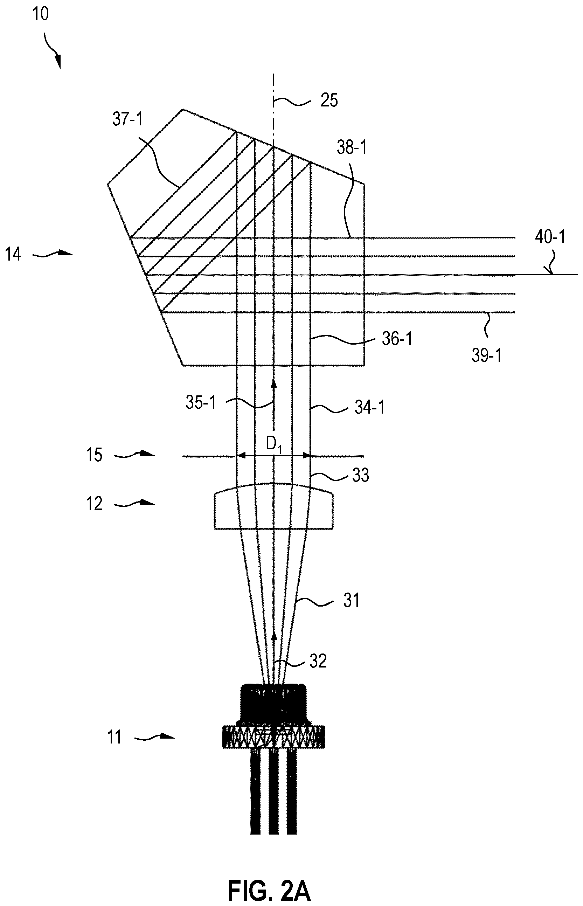

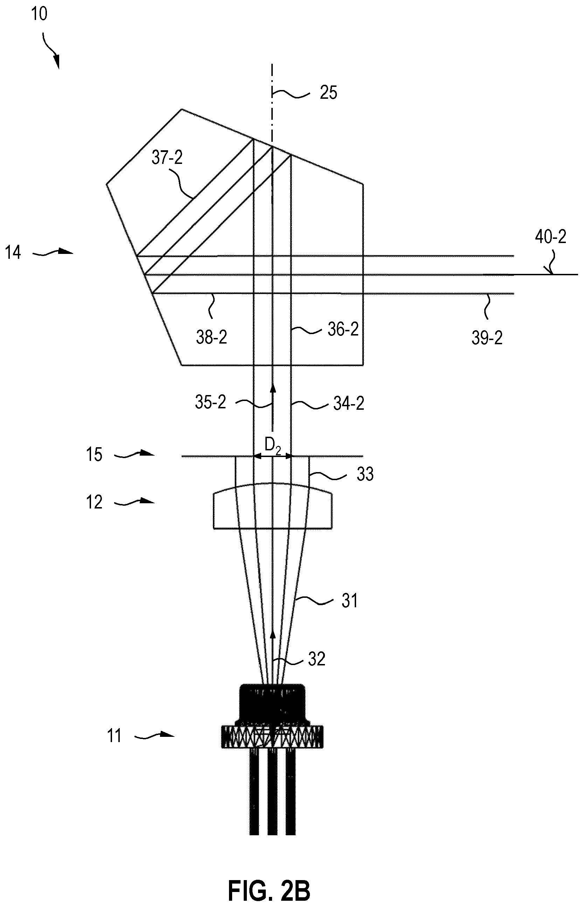

**FIGN. 2A****, B** zeigen das erfindungsgemäße Lasersystem 10 der FIG. 1, das auf einer Projektionsfläche eine Laserlinie erzeugt. Das Lasersystem 10 umfasst die Laserstrahlquelle 11, die Fokussieroptik 12, die Blendeneinrichtung 15 und das Pentaprisma 14. Das Lasersystem 10 ist mithilfe der Blendeneinrichtung 15 zwischen einer ersten Position (FIG. 2A) und einer zweiten Position (FIG. 2B) verstellbar.

Die Laserstrahlquelle 11 erzeugt einen divergenten Laserstrahl **31,** der entlang einer Ausbreitungsrichtung **32** ausgesandt wird. Als optische Achse des Laserstrahls ist die Symmetrieachse der Strahlverteilung definiert. Der Laserstrahl 31 weist bevorzugt eine Strahlverteilung in Form einer Gauß-Verteilung, einer Lorentz-Verteilung oder einer Bessel-Verteilung auf. Diese Strahlverteilungen weisen keinen abrupten Sprung der Intensität auf und unterstützen die Erzeugung einer scharf begrenzten Laserlinie auf einer Projektionsfläche.

Der divergente Laserstrahl 31 trifft auf die Fokussieroptik 12, die einen fokussierten Laserstrahl **33** erzeugt. Der fokussierte Laserstrahl 33 trifft auf die Blendeneinrichtung 15, die den Laserstrahl formen kann. Bei der in FIG. 2A gezeigten ersten Position weist die Blendenöffnung 18 einen ersten Öffnungsdurchmesser **D₁** auf und bei der in FIG. 2B gezeigten zweiten Position einen zweiten Öffnungsdurchmesser **D₂,** der kleiner als der erste Öffnungsdurchmesser D₁ ist.

Die Blendeneinrichtung 15 erzeugt in der ersten Position einen ersten geformten Laserstrahl **34-1** mit einer ersten Strahlachse **35-1** (FIG. 2A) und in der zweiten Position einen zweiten geformten Laserstrahl **34-2** mit einer zweiten Strahlachse **35-2** (FIG. 2B). Der erste Öffnungsdurchmesser D₁ ist so ausgewählt, dass der erste geformte Laserstrahl 34-1 die Blendenöffnung 18 nahezu unverändert passiert, wohingegen der zweite Öffnungsdurchmesser D₂ so ausgewählt ist, dass der zweite geformte Laserstrahl 34-2 durch die Blendenöffnung 18 im Randbereich begrenzt wird. Alternativ zur in FIG. 2A gezeigten ersten Position kann die Blendeneinrichtung 15 in eine Position außerhalb des Strahlengangs des Laserstrahls verstellt werden.

Der erste bzw. zweite geformte Laserstrahl 34-1, 34-2 trifft auf die Eintrittsfläche 21 und tritt als erster bzw. zweiter transmittierter Laserstrahl **36-1, 36-2** durch die Eintrittsfläche 21 in das Pentaprisma 14 ein. Im Pentaprisma 14 erfolgt an der ersten Reflektionsfläche 22 eine erste Reflektion und an der zweiten Reflektionsfläche 23 eine zweite Reflektion. Der an der ersten Reflektionsfläche 22 reflektierte Laserstrahl wird als erster bzw. zweiter einfach reflektierter Laserstrahl **37-1, 37-2** bezeichnet und der an der zweiten Reflektionsfläche 23 reflektierte Laserstrahl als erster bzw. zweiter zweifach reflektierter Laserstrahl **38-1, 38-2.** Der erste bzw. zweite zweifach reflektierte Laserstrahl 38-1, 38-2 trifft auf die Austrittsfläche 24, verlässt das Pentaprisma 14 als erster bzw. zweiter umgelenkter Laserstrahl **39-1, 39-2** und erzeugt auf einer Projektionsfläche eine Laserlinie. Die erste Reflektionsfläche 22 und zweite Reflektionsfläche 23 sind so zueinander ausgerichtet, dass sich der erste bzw. zweite umgelenkte Laserstrahl 39-1, 39-2 in einer Ausbreitungsebene **40-1, 40-2** ausbreitet, die senkrecht zur ersten bzw. zweiten Strahlachse 35-1, 35-2 des ersten bzw. zweiten geformten Laserstrahls 34-1, 34-2 angeordnet ist.

Durch die Blendeneinrichtung 15, die zwischen der ersten Position (FIG. 2A) und zweiten Position (FIG. 2B) verstellbar ist, kann die Breite der Laserlinie in zwei Entfernungsbereichen eingestellt werden. Neben dem ersten und zweiten Öffnungsdurchmesser D₁, D₂ kann die Blendeneinrichtung 15 stufenlos oder in diskreten Stufen zwischen dem ersten Öffnungsdurchmesser D₁ und zweiten Öffnungsdurchmesser D₂ verstellt werden.

Der erste umgelenkte Laserstrahl 39-1 mit einem ersten Strahldurchmesser ist für einen ersten Entfernungsbereich vorgesehen und der zweite umgelenkte Laserstrahl 39-2 mit einem zweiten Strahldurchmesser für einen zweiten Entfernungsbereich, wobei der erste Entfernungsbereich größere Entfernungen umfasst als der zweite Entfernungsbereich. Da die Sichtbarkeit einer Laserlinie mit größeren Entfernungen abnimmt, ist es vorteilhaft, dass der größere erste Strahldurchmesser für größere Entfernungen vorgesehen ist, da die volle Laserleistung in größeren Entfernungen genutzt werden kann.

Die Fokussieroptik 12 des Lasersystems 10 wird so ausgewählt, dass die Strahltaille des Laserstrahls im ersten Entfernungsbereich liegt und auf der Projektionsfläche eine schmale, gut sichtbare Laserlinie erzeugt wird. In kleineren Entfernungen wird die Laserleistung durch die Blendeneinrichtung 15 reduziert; die Begrenzung des Strahldurchmessers wirkt sich positiv auf die Breite der Laserlinie aus (schmale Laserlinie) und ist im Hinblick auf die Sichtbarkeit der Laserlinie auf der Projektionsfläche unkritisch.

Alternativ zu der als Pentaprisma ausgebildeten Umlenkoptik 14 kann eine Umlenkoptik verwendet werden, die einen ersten Spiegel und einen zweiten Spiegel aufweist. Dabei ersetzt der erste Spiegel die erste Reflektionsfläche 22 und der zweite Spiegel die zweite Reflektionsfläche 23 des Pentaprisma 14. Die Anordnung des ersten und zweiten Spiegels erfolgt analog zur ersten und zweiten Reflektionsfläche 22, 23 so, dass der umgelenkte Laserstrahl senkrecht zur Strahlachse des auftreffenden Laserstrahls angeordnet ist.

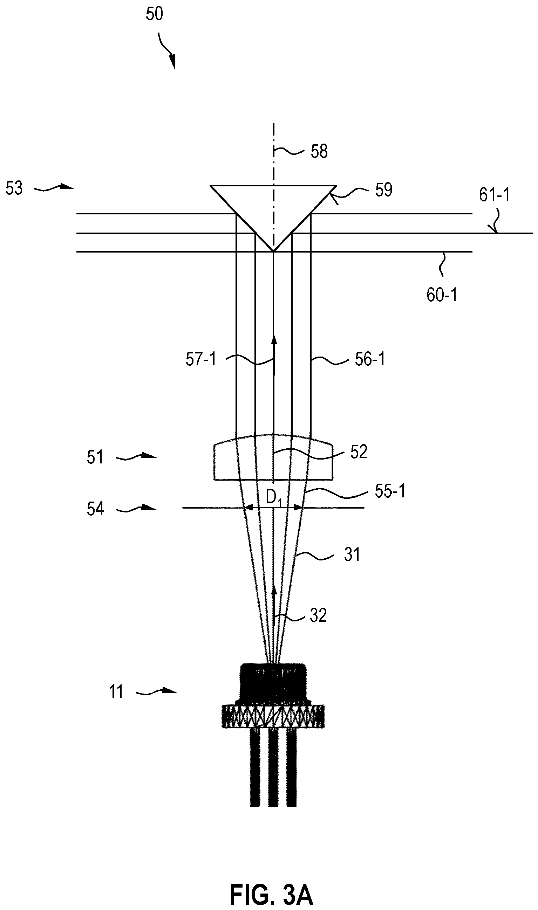

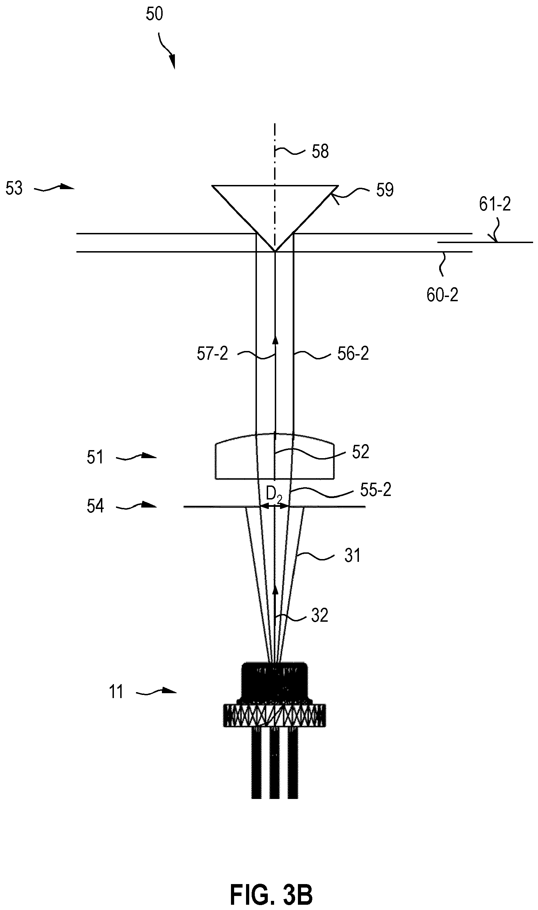

**FIGN. 3A****, B** zeigen eine weitere Ausführungsform eines erfindungsgemäßen Lasersystems **50,** das als Linienlaser ausgebildet ist und auf einer Projektionsfläche eine Laserlinie erzeugt.

Das Lasersystem 50 umfasst die Laserstrahlquelle 11, eine als Fokussieroptik ausgebildete Strahlformungsoptik **51** mit einer optischen Achse **52,** eine als Kegelspiegel ausgebildete Umlenkoptik **53** und eine Blendeneinrichtung **54.** Die Komponenten des Lasersystems 50 sind in der Reihenfolge Laserstrahlquelle 11, Blendeneinrichtung 54, Fokussieroptik 51 und Umlenkoptik 53 angeordnet. Das Lasersystem 50 ist mithilfe der Blendeneinrichtung 54 zwischen einer ersten Position (FIG. 3A) und einer zweiten Position (FIG. 3B) verstellbar.

Die Laserstrahlquelle 11 erzeugt den divergenten Laserstrahl 31, der entlang der Ausbreitungsrichtung 32 ausgesandt wird und auf die Blendeneinrichtung 54 trifft, die den divergenten Laserstrahl 31 formen kann. Bei der in FIG. 3A gezeigten ersten Position weist die Blendeneinrichtung 54 einen ersten Öffnungsdurchmesser **D₁** auf und bei der in FIG. 3B gezeigten zweiten Position einen zweiten Öffnungsdurchmesser **D₂,** der kleiner als der erste Öffnungsdurchmesser D₁ ist.

Die Blendeneinrichtung 54 erzeugt in der ersten Position einen ersten geformten Laserstrahl **55-1** (FIG. 3A) und in der zweiten Position einen zweiten geformten Laserstrahl **55-2** (FIG. 3B). Der erste bzw. zweite geformte Laserstrahl 55-1, 55-2 trifft auf die Fokussieroptik 51, die einen ersten bzw. zweiten fokussierten Laserstrahl **56-1, 56-2** mit einer ersten bzw. zweiten Strahlachse **57-1, 57-2** erzeugt. Der erste bzw. zweite fokussierte Laserstrahl 56-1, 56-2 trifft auf die als Kegelspiegel ausgebildete Umlenkoptik 53.

Der Kegelspiegel 53 ist als Abschnitt eines geraden Kegels mit einer Kegelachse 58 ausgebildet und weist eine Mantelfläche **59** auf, die für die Wellenlänge der Laserstrahlquelle 11 als Reflektionsfläche ausgebildet ist. Der auf die Mantelfläche 59 auftreffende erste bzw. zweite fokussierte Laserstrahl 56-1, 56-2 wird an der Mantelfläche 59 überwiegend reflektiert und in einen ersten bzw. zweiten umgelenkten Laserstrahl **60-1, 60-2** umgeformt. Der erste bzw. zweite umgelenkte Laserstrahl 60-1, 60-2 breitet sich in einer Ausbreitungsebene **61-1, 61-2** aus, die senkrecht zur ersten bzw. zweiten Strahlachse 57-1, 57-2 des fokussierten Laserstrahls 56-1, 56-2 angeordnet ist.

Durch die Blendeneinrichtung 54, die zwischen der ersten Position (FIG. 3A) und zweiten Position (FIG. 3B) verstellbar ist, kann die Breite der Laserlinie in zwei Entfernungsbereichen eingestellt werden. Neben dem ersten und zweiten Öffnungsdurchmesser D₁, D₂ kann die Blendeneinrichtung 54 stufenlos oder in diskreten Stufen zwischen dem ersten Öffnungsdurchmesser D₁ und zweiten Öffnungsdurchmesser D₂ verstellt werden.

Der erste umgelenkte Laserstrahl 60-1 mit einem ersten Strahldurchmesser ist für einen ersten Entfernungsbereich vorgesehen und der zweite umgelenkte Laserstrahl 60-2 mit einem zweiten Strahldurchmesser, der kleiner als der erste Strahldurchmesser ist, für einen zweiten Entfernungsbereich, wobei der erste Entfernungsbereich größere Entfernungen umfasst als der zweite Entfernungsbereich. Da die Sichtbarkeit einer Laserlinie mit größeren Entfernungen abnimmt, ist es vorteilhaft, dass der größere erste Strahldurchmesser für größere Entfernungen vorgesehen ist, da die volle Laserleistung in größeren Entfernungen genutzt werden kann.

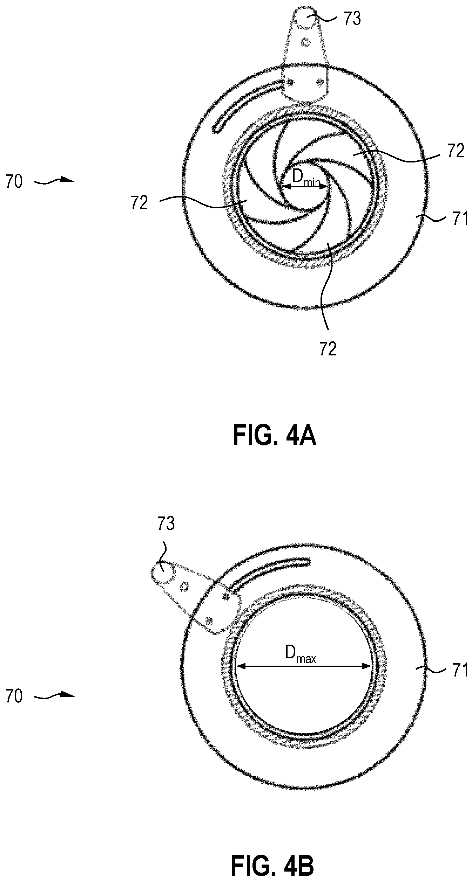

**FIGN. 4A****, B** zeigen eine als Irisblende ausgebildete Blendeneinrichtung **70,** die stufenlos zwischen einer minimalen Blendenöffnung **Dₘᵢₙ** (FIG. 4A) und einer maximalen Blendenöffnung **Dₘₐₓ** (FIG. 4B) verstellbar ist. Die Irisblende 70 kann im Lasersystem 10 die Blendeneinrichtung 15 und im Lasersystem 50 die Blendeneinrichtung 54 ersetzen.

Die Irisblende 70 besteht aus einem Ring **71** und mehreren Lamellen **72,** die über einen Hebel **73** gemeinsam nach innen oder außen gedreht werden können. Die Irisblende 70 kann mithilfe des Hebels 73 stufenlos zwischen der minimalen Blendenöffnung Dₘᵢₙ und der maximalen Blendenöffnung Dₘₐₓ verstellt werden. Jede Lamelle 72 ist auf einer separaten Achse gelagert und alle Lamellen 72 sind mit dem Ring 71 über eine weitere Achse verbunden, damit sie sich gemeinsam bewegen. Je mehr Lamellen 72 eingesetzt werden, desto besser kann die Blendenöffnung bei der Verstellung an die Kreisform angenähert werden.

Die Verwendung der 70 Irisblende als Blendeneinrichtung hat den Vorteil, dass die Blendenöffnung stufenlos verstellbar ist. Der Anwender kann die Breite der Laserlinie, die das Lasersystem auf einer Projektionsfläche erzeugt, sehr genau an seine Anforderungen und den Entfernungsbereich anpassen.

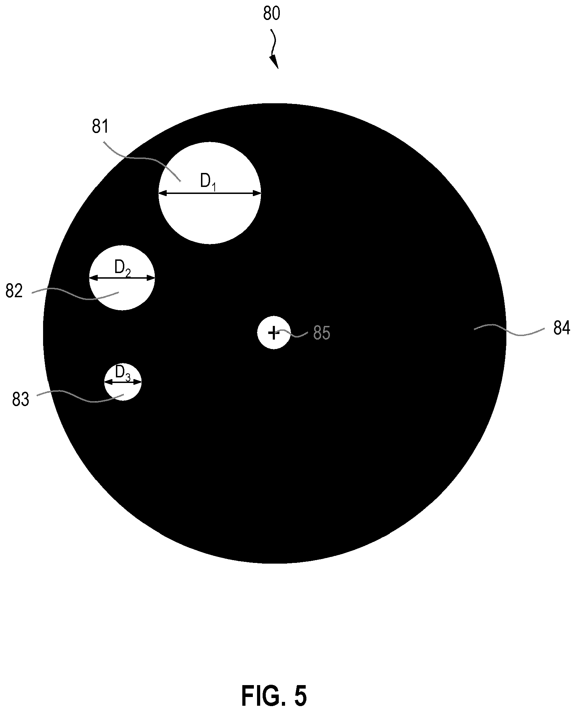

**FIG. 5** zeigt eine als Blendenrad ausgebildete weitere Blendeneinrichtung **80,** die zwischen einer ersten Position, einer zweiten Position und einer dritten Position verstellbar ist. Das Blendenrad 80 kann im Lasersystem 10 die Blendeneinrichtung 15 und im Lasersystem 50 die Blendeneinrichtung 54 ersetzen.

Das Blendenrad 80 weist in der ersten Position eine erste Blendenöffnung **81** mit einem ersten Öffnungsdurchmesser **D₁,** in der zweiten Position eine zweite Blendenöffnung **82** mit einem zweiten Öffnungsdurchmesser **D₂** und in der dritten Position eine dritte Blendenöffnung **83** mit einem dritten Öffnungsdurchmesser **D₃** auf. Die erste Blendenöffnung 81, zweite Blendenöffnung 82 und dritte Blendenöffnung 83 sind in einem Optikträger **84** angeordnet und um eine Drehachse **85** drehbar ausgebildet.

Das Blendenrad 80 kann durch Drehung um die Drehachse 85 zwischen der ersten Position, in der die erste Blendenöffnung 81 im Strahlengang des Laserstrahls angeordnet ist, der zweiten Position, in der die zweite Blendenöffnung 82 im Strahlengang des Laserstrahls angeordnet ist, und der dritten Position, in der die dritte Blendenöffnung 83 im Strahlengang des Laserstrahls angeordnet ist, verstellt werden.

Neben der ersten, zweiten und dritten Blendenöffnung 81, 82, 83 können weitere Blendenöffnungen in den Optikträger 84 integriert werden. Das Blendenrad 80 ermöglicht eine Verstellung der Blendenöffnung in diskreten Stufen.

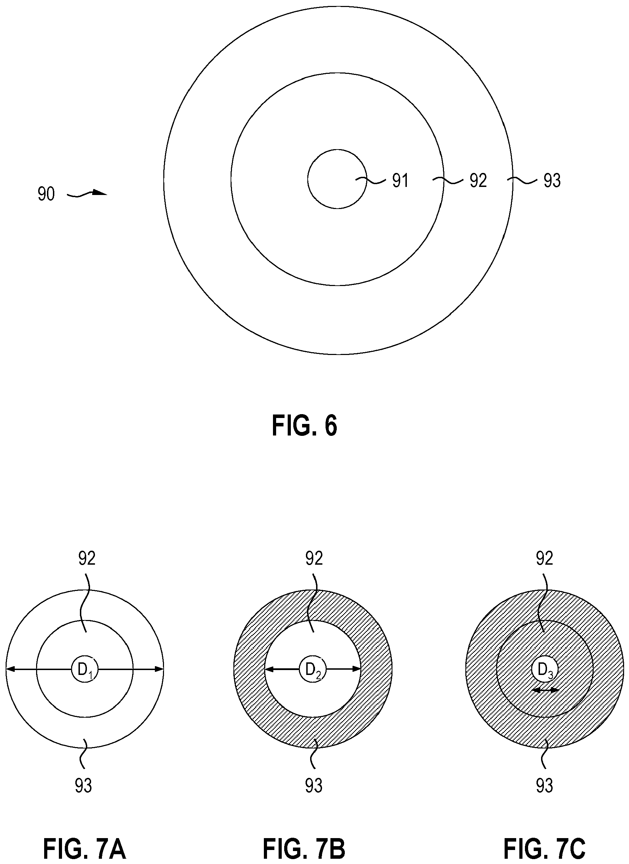

**FIG. 6** zeigt eine weitere Blendeneinrichtung **90,** die zwischen einer ersten Position, einer zweiten Position und einer dritten Position verstellbar ist. Die Blendeneinrichtung 90 kann im Lasersystem 10 die Blendeneinrichtung 15 und im Lasersystem 50 die Blendeneinrichtung 54 ersetzen.

Die Blendeneinrichtung 90 weist eine Kreisöffnung **91,** einen ersten Kreisring **92** und einen zweiten Kreisring **93** auf. Der erste Kreisring 92 und zweite Kreisring 93 sind konzentrisch zur Kreisöffnung 91 angeordnet und sind unabhängig voneinander zwischen einem ersten Zustand (durchlässig) und einem zweiten Zustand (undurchlässig) schaltbar.

Der erste Kreisring 92 wird als Polarisationsfilter für einen auftreffenden Laserstrahl verwendet und ist so ausgebildet, dass sein Transmissionsgrad T verstellbar ist. Der erste Kreisring 92 ist für die Wellenlänge der Laserstrahlquelle 11 zwischen dem ersten Zustand, in dem der Transmissionsgrad T grösser als 90% ist, und dem zweiten Zustand, in dem der Transmissionsgrad T kleiner als 10% ist, schaltbar.

Der zweite Kreisring 93 wird als Polarisationsfilter für einen auftreffenden Laserstrahl verwendet und ist so ausgebildet, dass sein Transmissionsgrad T verstellbar ist. Der zweite Kreisring 93 ist für die Wellenlänge der Laserstrahlquelle 11 zwischen dem ersten Zustand, in dem der Transmissionsgrad T grösser als 90% ist, und dem zweiten Zustand, in dem der Transmissionsgrad T kleiner als 10% ist, schaltbar.

Im Ausführungsbeispiel der FIG. 6 wird die Kreisöffnung 91 ebenfalls als Polarisationsfilter für einen auftreffenden Laserstrahl verwendet und ist so ausgebildet, dass ihr Transmissionsgrad T verstellbar ist. Die Kreisöffnung 91 ist für die Wellenlänge der Laserstrahlquelle 11 zwischen dem ersten Zustand, in dem der Transmissionsgrad T grösser als 90% ist, und dem zweiten Zustand, in dem der Transmissionsgrad T kleiner als 10% ist, schaltbar.

**FIGN. 7A-C** zeigen die Blendeneinrichtung 90 der FIG. 6 in einer ersten Position (FIG. 7A), einer zweiten Position (FIG. 7B) und einer dritten Position (FIG. 7C).

In der in FIG. 7A gezeigten ersten Position der Blendeneinrichtung 90 sind die Kreisöffnung 91, der erste Kreisring 92 und der zweite Kreisring 93 in den ersten Zustand geschaltet und sind mit einem Transmissionsgrad T grösser als 90% für die Wellenlänge der Laserstrahlquelle 11 überwiegend durchlässig. Die Blendeneinrichtung 90 weist in der ersten Position einen ersten Blendendurchmesser **D₁** auf, der dem äusseren Ringdurchmesser des zweiten Kreisringes 93 entspricht.

In der in FIG. 7B gezeigten zweiten Position der Blendeneinrichtung 90 sind die Kreisöffnung 91 und der erste Kreisring 92 in den ersten Zustand geschaltet und der zweite Kreisring 93 ist in den zweiten Zustand geschaltet. Die Kreisöffnung 91 und der erste Kreisring 92 sind mit einem Transmissionsgrad T grösser als 90% für die Wellenlänge der Laserstrahlquelle 11 überwiegend durchlässig und der zweite Kreisring 93 ist mit einem Transmissionsgrad T kleiner als 10% für die Wellenlänge der Laserstrahlquelle 11 überwiegend undurchlässig. Die Blendeneinrichtung 90 weist in der zweiten Position einen zweiten Blendendurchmesser **D₂** auf, der dem äusseren Ringdurchmesser des ersten Kreisringes 92 entspricht.

In der in FIG. 7C gezeigten dritten Position der Blendeneinrichtung 90 ist die Kreisöffnung 91 in den ersten Zustand geschaltet und der erste Kreisring 92 und zweite Kreisring 93 sind in den zweiten Zustand geschaltet. Die Kreisöffnung 91 ist mit einem Transmissionsgrad T grösser als 90% für die Wellenlänge der Laserstrahlquelle 11 überwiegend durchlässig und der der erste Kreisring 92 und zweite Kreisring 93 sind mit einem Transmissionsgrad T kleiner als 10% für die Wellenlänge der Laserstrahlquelle 11 überwiegend undurchlässig. Die Blendeneinrichtung 90 weist in der dritten Position einen dritten Blendendurchmesser **D₃** auf, der dem Kreisdurchmesser der Kreisöffnung 91 entspricht.

Der erste und zweite Kreisring 92, 93, die zwischen einem durchlässigen ersten Zustand und einem undurchlässigen zweiten Zustand schaltbar sind, ermöglichen die Formung eines ersten Laserstrahls mit einem ersten Strahldurchmesser, eines zweiten Laserstrahls mit einem zweiten Strahldurchmesser und eines dritten Laserstrahls mit einem dritten Strahldurchmesser. Dabei sind der erste Strahldurchmesser für einen ersten Entfernungsbereich, der zweite Strahldurchmesser für einen zweiten Entfernungsbereich und der dritte Strahldurchmesser für einen dritten Entfernungsbereich ausgelegt. Der erste Entfernungsbereich umfasst größere Entfernungen als der zweite Entfernungsbereich und der erste Entfernungsbereich umfasst kleinere Entfernungen als der erste Entfernungsbereich.

## Patentansprüche

1. Lasersystem (10; 50) zur Erzeugung einer Laserline, aufweisend:
▪ eine Laserstrahlquelle (11), die einen Laserstrahl (31) erzeugt,
▪ eine Strahlformungsoptik (12; 51), die als Fokussieroptik ausgebildet ist und einen Laserstrahl in einen fokussierten Laserstrahl (34-1, 34-2; 56-1, 56-2) umformt, und
▪ eine Umlenkoptik (14; 53), die einen auftreffenden Laserstrahl (34-1, 34-2; 56-1, 56-2) in eine Ausbreitungsebene (40-1, 40-2; 61-1, 61-2) senkrecht zur Strahlachse (35-1, 35-2; 57-1, 57-2) des auftreffenden Laserstrahls (34-1, 34-2; 56-1, 56-2) umlenkt,
**dadurch gekennzeichnet, dass** zwischen der Laserstrahlquelle (11) und der Umlenkoptik (14; 53) eine verstellbare Blendeneinrichtung (15; 54; 70; 80; 90) angeordnet ist.

2. Lasersystem nach Anspruch 1, **dadurch gekennzeichnet, dass** die Blendeneinrichtung (15; 54; 70; 80; 90) zwischen einer ersten Position und einer zweiten Position verstellbar ist.

3. Lasersystem nach Anspruch 2, **dadurch gekennzeichnet, dass** die Blendeneinrichtung (15; 54) in der ersten Position einen ersten Öffnungsdurchmesser (D₁) und in der zweiten Position einen zweiten Öffnungsdurchmesser (D₂) aufweist, wobei der erste Öffnungsdurchmesser (D₁) und zweite Öffnungsdurchmesser (D₂) verschieden sind.

4. Lasersystem nach Anspruch 2, **dadurch gekennzeichnet, dass** die Blendeneinrichtung (15; 54) in der ersten Position außerhalb des Strahlengangs des Laserstrahls und in der zweiten Position im Strahlengang des Laserstrahls angeordnet ist.

5. Lasersystem nach einem der Ansprüche 1 bis 3, **dadurch gekennzeichnet, dass** die Blendeneinrichtung (70) als Irisblende ausgebildet ist, die zwischen einer minimalen Blendenöffnung (Dₘᵢₙ) und einer maximalen Blendenöffnung (Dₘₐₓ) verstellbar ist.

6. Lasersystem nach einem der Ansprüche 1 bis 3, **dadurch gekennzeichnet, dass** die Blendeneinrichtung (90) eine Kreisöffnung (91) und einen ersten Kreisring (92) aufweist, wobei der erste Kreisring (92) konzentrisch zur Kreisöffnung (91) angeordnet ist und zwischen einem ersten Zustand und einem zweiten Zustand schaltbar ist.

7. Lasersystem nach Anspruch 6, **dadurch gekennzeichnet, dass** der erste Kreisring (92) für die Wellenlänge der Laserstrahlquelle (11) im ersten Zustand durchlässig mit einem Transmissionsgrad T grösser als 90% und im zweiten Zustand undurchlässig mit einem Transmissionsgrad T kleiner als 10% ausgebildet ist.

8. Lasersystem nach einem der Ansprüche 6 bis 7, **dadurch gekennzeichnet, dass** die Blendeneinrichtung (90) einen zweiten Kreisring (93) aufweist, wobei der zweite Kreisring (93) konzentrisch zum ersten Kreisring (92) angeordnet ist und zwischen einem ersten Zustand und einem zweiten Zustand schaltbar ist.

9. Lasersystem nach Anspruch 8, **dadurch gekennzeichnet, dass** der zweite Kreisring (93) für die Wellenlänge der Laserstrahlquelle (11) im ersten Zustand durchlässig mit einem Transmissionsgrad T grösser als 90% und im zweiten Zustand undurchlässig mit einem Transmissionsgrad T kleiner als 10% ausgebildet ist.
